# EUROPÄISCHE PATENTSCHRIFT

(11) **EP 1 321 213 B1**
(45) Veröffentlichungstag und Bekanntmachung des Hinweises auf die Patenterteilung: **30.08.2006**
(21) Anmeldenummer: 02027229.0
(22) Anmeldetag: 06.12.2002
(51) Int. Cl.: B23D 31/00

(54) **Halbzeug aus duktilem Material mit Sollbruchstellen und dessen Verwendung**
Preform made of ductile material comprising lines of weakness and use of the preform
Ebauche en matériau ductile comprenant des lignes d'affaiblissement ansi qu'utilisation de l'ébauche

(30) Priorität: 21.12.2001 DE 10163038
(43) Veröffentlichungstag der Anmeldung: 25.06.2003
(73) Patentinhaber: WIELAND-WERKE AG, 89070 Ulm (DE)
(72) Erfinder: Bögel, Andreas, Dr., 89264 Weissenhorn (DE); Buresch, Isabell, Dr., 89257 Illertissen (DE); Klöckler, Robert, 89257 Tiefenbach (DE); Koböcken, Heinz-Ulrich, 58093 Hagen (DE); Lepin, Eberhard, 89257 Illertissen (DE); Stahl, Karl-Hermann, 89269 Vöhringen (DE); Stöckl, Hans-Jürgen, 89269 Vöhringen (DE)

(56) Entgegenhaltungen:
- EP-A- 0 491 574
- BE-A- 376 500
- DE-A- 1 815 380
- DE-A- 3 314 830
- DE-A- 19 641 144
- GB-A- 1 406 796
- US-A- 3 162 907
- US-A- 3 416 347
- US-A- 4 011 109
- US-A- 4 109 500

## Beschreibung

Die Erfindung betrifft Halbzeug aus duktilem Material mit den Merkmalen nach Anspruch 1. Gegenstand der Erfindung ist weiterhin die Verwendung des Halbzeugs.

Duktile Materialien werden als Halbzeug in großen Mengen und großen Formaten gefertigt, namentlich metallische Werkstoffe. Im Laufe der Fertigung ergibt sich die Notwendigkeit die erforderlichen Geometrien durch Vereinzelung der in Mehrfachbreite oder Mehrfachlänge hergestellten Vorformen zu erreichen. So werden zum Beispiel bandförmige Halbzeuge durch Längs- und Querteilen auf die für den jeweiligen Verwendungszweck erforderliche Breite und/oder Länge konfektioniert. In der Massenfertigung sind dafür größtenteils Schneidverfahren im Einsatz, die nach dem Rollschnittprinzip ausgelegt sind.

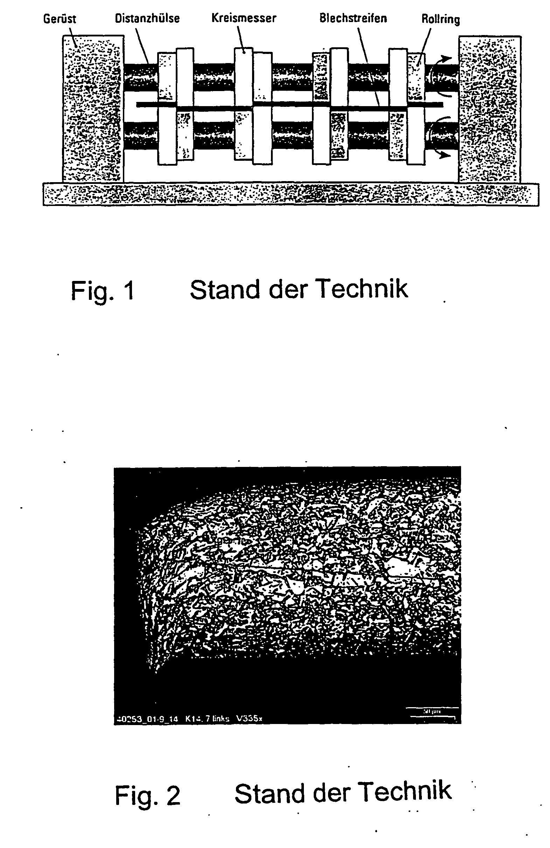

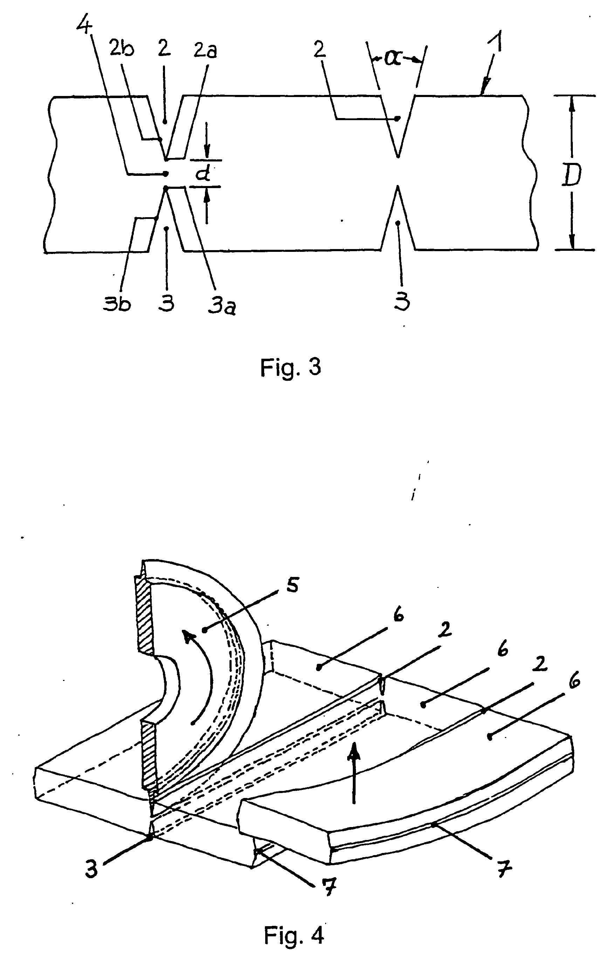

Dabei wird zumeist zum Coil gewickeltes Blechband in Längsteilanlagen in mehrere schmale Bänder oder Bandstreifen geteilt. Das Trennen erfolgt durch verlustfreies Schneiden mit kreisrunden, rotierenden Messern (Kreismessem). Kreismesserscheren mit einer durchgehenden Arbeitswelle werden mit Kreismessern, Rollringen und Distanzhülsen bestückt. Das Verfahren nach dem Stand der Technik zeigt **Fig. 1.**
- [Quelle:: Handbuch der Umformtechnik / Schuler GmbH Springer-Verlag Berlin Heidelberg New York, 1996, S. 286, Abb. 4.6.2]

Eine für das spanlose Längsteilen typische Kreismesserschere nach dem Rollschnittprinzip besteht im wesentlichen also aus rotationssymmetrischen Messern, die in dem auf die Dicke des zu teilenden Materials angepassten Abstand auf einem oberen und auf einem unteren Messerbalken befestigt sind oder aber axial auf Messerwellen über und unter dem Band gespannt werden. Die Messer werden axial auf eine bestimmte Schneidluft und vertikal auf eine Eintauchtiefe der Werkzeuge zueinander eingestellt. Diese Werte sind durch die Beschaffenheit des Materials selbst, dessen Dicke und von der angestrebten Ausformung der Schnittkante bestimmt.

Die Bogenschneide eines Obermessers rollt beim Schneiden dann gegen die Schneide eines Untermessers ab. Ein Teil des Materials wird durch die zusammenwirkenden Messer geschert, die übrige Materialdicke bricht bis zur vollständigen Durchtrennung.

Für viele Materialien beträgt dieser Bruchanteil, abhängig von Dicke, Härte und Beschaffenheit, ca. 20 - 40 % der Banddicke. Die Bruchzone entwickelt naturgemäß eine stark aufgeraute Gewaltbruchoberfläche. Ihre Gestalt ist durch den weitgehend freiablaufenden Prozeß des Brechens bestimmt. Form und Maße der Bruchzone weichen daher deutlich von der durch die unmittelbare Einwirkung der Werkzeuge gebildeten Scherzone ab und zwingend läuft die Bruchzone an der ursprünglichen Oberfläche in einen Schneidgrat aus (Fig.2).

Der Schneidgrat ist hochverfestigtes, scharfkantiges Material, das über die Konturen des ideal getrennten Materials hinausreicht. Gestalt und Größe des Grates werden wiederum durch Verfahrensparameter stark beeinflußt.

Grate sind in jeder Hinsicht unerwünscht. Sie bergen Verletzungsrisiken bei manueller Handhabung. In der Weiterverarbeitung können durch Grate vermehrt unerwünschter Abrieb und Flitter entstehen oder Schädigung an umgebendem Material durch die Schneidwirkung des Grates hervorgerufen werden. In der Anwendung ist der immer an einer Außenkante des Materials liegende Grat grundsätzlich Schwachstelle. Hier beginnt oft die Rißbildung in dynamischen und statischen Belastungsfällen. Bei hohen Anforderungen an die Biegewechselfestigkeit speziell schmaler Materialstreifen bestehen besonders hohe Anforderungen an die Schnittqualität. Eine ungünstige Form der Bandkanten im Scherzonenbereich, die raue Bruchzone und der Schneidgrat beeinträchtigen die Biegewechselfestigkeit besonders stark. Große Anstrengungen werden daher auf die Minimierung der Gratbildung gerichtet und die preiswerte Nachbearbeitung getrennter, grathaltiger Bänder ist von großem Interesse.

Die undefinierte Gestalt des Bruchanteils der Trennfläche ist ein weiterer Mangel der im übrigen sonst so wirtschaftlich einsetzbaren Rollenmessertechnik. Für verschiedene Anwendungen werden daher statt der preiswerten getrennten bandförmigen Halbzeuge aufwändig durch Überwalzen der Kanten nachgearbeitete Bänder verlangt. Es werden auch alternativ Press-/Ziehprodukte in Drahtform eingesetzt, die von vornherein im gesamten Querschnitt definierte Geometrien besitzen.

Aus der DE-OS 1 815 380 ist eine Spaltkerbeinrichtung zum gratlosen Trennen von Blechen mittels Einkerbrollen auf beiden Seiten des Bleches entlang der Trennlinie bekannt, wobei die Einkerbrollen bei weicheren und dickeren Blechen auf beiden Eindringseiten einen symmetrischen und bei härteren dünneren Werkstoffen einen asymmetrischen Kerbwinkel aufweisen. Der gesamte Einkerbwinkel ist dabei stets kleiner als 90° und die Einkerbrollen weisen einen solchen Abstand auf, dass eine Kaltverfestigung des verbleibenden Steges eintritt. Den Einkerbrollen nachgeschaltet sind Spaltdrückrollen, die ein Auslenken des Bleches bewirken und damit ein brechen der Kerbstelle verursachen.

Aus der US 4,011,109 A ist ein Verfahren zur Herstellung von Stahldrähten, die beispielsweise in Reifen verwendet werden, aus Bändern bekannt. Die Herstellung erfolgt in mehreren Verfahrensschritten, bei denen unter anderem durch eine Wärmebehandlung des Stahls eine Umwandlung von Austenit zu Martensit bewirkt wird. Durch diese Martensitumwandlung verliert der Stahl seine Duktilität. Zur Vereinzelung der Bänder in Drähte sind Trennrollen als weitere Hilfsmittel notwendig, um die ausgehärteten Bandbereiche zu trennen.

Der vorliegenden Erfindung liegt daher die Aufgabe zugrunde die Nachteile des Trennens mit der Rollenschnitt-Technik nach dem Stand der Technik zu überwinden, ohne dabei hohe Kosten oder geringere Produktivität zu verursachen. Im Einzelnen sind folgende Teilaufgaben zu lösen:
Herstellung einer definierten Lage der Bruchzone,
Vermeidung der Gratbildung,
Reduzierung der Abrieb- und Flitterbildung,
drastische Verringerung des Bruchanteils,
Vermeidung der durch Bruchanteil und Außenlage des Grates bedingten mechanischen Schwachstelle des getrennten Gutes.

Diese Aufgabe wird erfindungsgemäß durch ein Halbzeug gemäß Anspruch 1.

Die Nuten sind insbes. spanlos geformt. Bei dem Halbzeug handelt es sich vorzugsweise um bandförmiges Material. Die Erfindung läßt sich aber beispielsweise ebenso bei Drähten oder Profildrähten anwenden. Bei beschichteten Bändern mit beispielsweise verzinnter, versilberter oder vernickelter Oberfläche ergibt sich zugleich der Vorteil, dass die Beschichtung der Nutenflanken weitgehend erhalten bleibt.

Besondere Ausführungsformen der Erfindung sind Gegenstand der Ansprüche 5 bis 19.

Auf der Grundlage der Funktionsweise von Kreismesserscheren werden durch die Erfindung das Scheren und das Brechen räumlich entkoppelt.

Es wird vorgeschlagen, zu trennendes Halbzeug aus Kupferbasiswerkstoffe plastische, nicht spangebende Umformung in der senkrecht zur späteren Trennlinie und gleichzeitig zur Oberfläche des Halbzeugs senkrecht stehenden Achse vorzugweise beidseitig und symmetrisch mit keilförmigen Nuten so zu versehen, dass zwischen den Spitzen der beiden einander möglichst genau gegenüberliegenden Nuten ein sehr dünner Steg des zu trennenden Materials verbleibt.

Es werden rotationssymmetrische Werkzeuge in maschinenbaulichen Anordnungen eingesetzt, wie sie von den herkömmlichen Kreismesserscheren bekannt sind. Für die keilförmigen Längsnuten werden beispielsweise Walzscheiben mit entsprechenden Profilen als Werkzeug eingesetzt. Eine typische Geometrie des Keilprofils weist Keilwinkel von 10 - 80° auf. Der achsiale und vertikale Versatz der Scheibenkeilspitzen ist minimal zu halten, sodass die engsten für die herkömmlichen Werkzeuge des Präzisionsschneidens realisierbaren Toleranzvorgaben anzuwenden sind.

Die Dicke des verbleibenden Steges beträgt bei erfindungsgemäßen, bandförmigen Halbzeug unterhalb von 0,5 mm Dicke vorzugsweise 5 bis 40% der Materialdicke des zu trennenden Materials. Der durch die Verdrängung des Materials aus den Nuten bewirkte Materialfluß in Länge und Breite des Halbzeugs, kann zu Veränderungen der Querschnittskontur des zu trennenden Halbzeuges führen, so daß fallweise zweckmäßig die Nachschaltung einer gebundenen Kaltumformung der in ihrer Formgenauigkeit beeinträchtigen Flächen vorzusehen ist.

Diese Kaltumformung kann gezielt eingesetzt werden, um in mindestens einem Umformschritt am Ort des Nutenpaares eine nahezu rechtwinklige Kantenausführung zu erreichen.

Zudem ermöglicht diese Kaltumformung, in den Fällen von Dünnstbändem mit D ≤ 0,2 mm und Folien, bei denen eine definierte Kerbung aufgrund der Toleranzfrage schwierig oder nicht zuverlässig möglich ist, von einem vorgefertigten Band auszugehen, dessen Nuten in mehreren Schritten zwar annähernd zugewalzt werden, dessen Sollbruchstelle aber erhalten bleibt (Anspruch 20).

Das so vorbereitete Halbzeug wird durch Auslenken der durch die Nuten abgegrenzten Halbzeugbereiche gegeneinander mit geringer Kraft und mit beliebiger Geschwindigkeit in einem weiteren Schritt getrennt.

Gegenstand der Erfindung ist weiterhin die Verwendung des erfindungsgemäßen Halbzeug gemäß Anspruch 15 bis 18.

Die getrennten Halbzeugabschnitte haben nach der erfindungsgemäßen Durchführung des Verfahrens definiert ausgebildete Außenkanten. Die Bruchfläche liegt immer vollständig in der Fläche der Trennfläche eingebettet, ohne bis auf die ursprüngliche Materialoberfläche zu reichen. Die Ausdehnung der Bruchfläche entspricht der Dicke des durch die jeweils beiden gegenüberliegenden Nuten gebildeten Steges. Sie ist damit um ein Vielfaches kleiner als beim herkömmlichen Schneiden mit Rollenmessern. Ein Grat entsteht bei hinreichender gegenseitig fluchtender Ausrichtung der Nuten beim Durchtrennen des Steges nicht.

Gegenüber dem Stand der Technik nach Fig. 1 und 2 wird die Erfindung anhand des Ausführungsbeispiels nach Fig. 3 bis 5 erläutert. Es zeigt:
- Fig.1: die Längsteilung eines bandförmigen Halbzeugs nach dem Stand der Technik,
- Fig.2: die Gratbildung nach dem Stand der Technik,
- Fig.3: schematisch ein bandförmiges Halbzeug mit erfindungsgemäßen Längsnuten,
- Fig.4: schematisch die Herstellung des erfindungsgemäßen Halbzeugs und das Abtrennen eines Halbzeugsabschnittes davon,

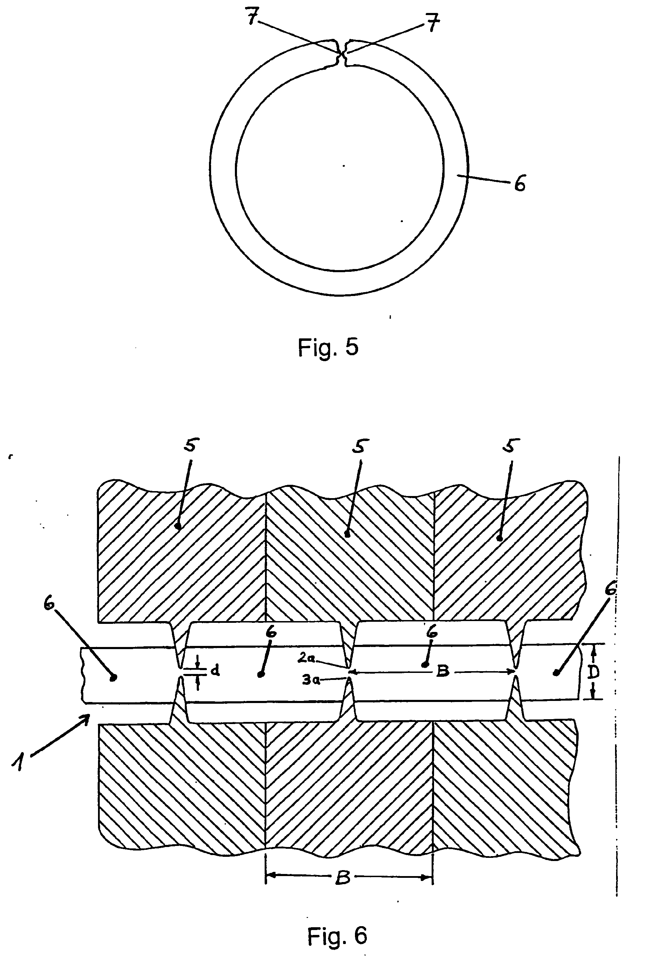

- Fig. 5: schematisch einen zum Schlitzrohr eingeformten Halbzeugabschnitt vor der Verschweißung zum Rohr mit Längsnaht,
- Fig.6: detaillierter die Herstellung des erfindungsgemäßen Halbzeugs im Zusammenhang mit einem Zahlenbeispiel und

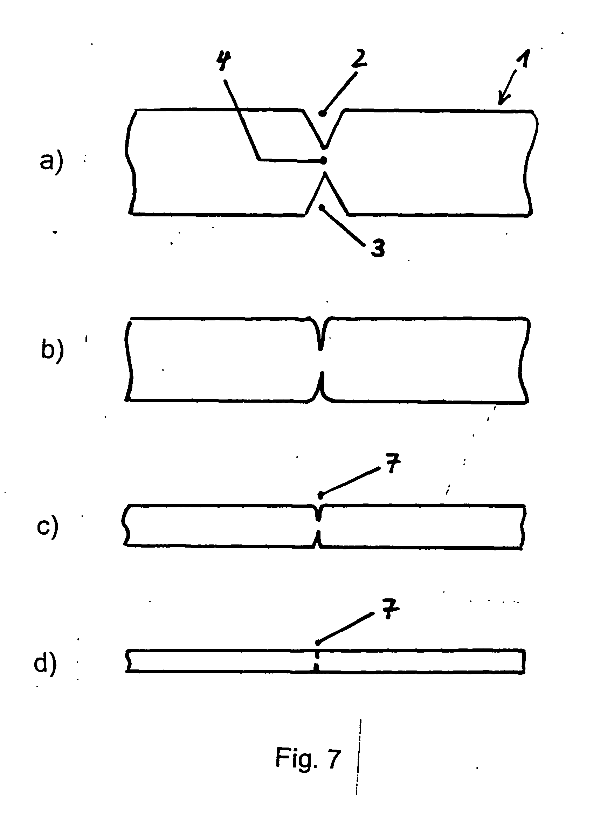

- Fig.7: schematisch den Einfluss von Walzschritten auf die Ausbildung eines Nutenpaares bei Erhalt der Sollbruchstelle.

Das bandförmige Halbzeug 1 der Dicke D nach Fig. 3 und 4 weist zwei Paare keilförmiger Längsnuten 2, 3 auf. Die Nuten 2 und 3 haben Spitzen 2a und 3a, sowie Flanken 2b und 3b, zwischen denen der Keilwinkel α gebildet ist. Zwischen den - vorzugsweise mit geringem Versatz - angeordneten Spitzen 2a, 3a erstreckt sich ein dünner Steg 4 der Dicke d.

Die Nuten 2, 3 werden gemäß Fig. 4 mittels oberer und unterer Kerbscheibe 5 (hier ist nur eine obere dargestellt) eingeprägt. Der zwischen den Nuten 2,3 liegende Werkstoff wurde durch den beidseitigen Prägevorgang verfestigt. Der Steg 4 ist dünn und hat zwar erhöhte spezifische Festigkeit, aber die Bruchdehnung des Werkstoffes ist im eng lokalisierten Bereich des Steges 4 stark herabgesetzt. Dadurch ist die Trennbarkeit vorbereitet und erfordert nur geringe Kraft. Durch die Auslenkung der den Nuten 2, 3 benachbarten Bereiche mit den erforderlichen Kräften in Richtung des in Fig. 4 eingezeichneten Pfeils wird ein Halbzeugabschnitt 6 abgetrennt.

Wie angedeutet, weist der Halbzeugabschnitt 6 (beidseitig) nur eine geringfügige Bruchfläche 7 auf.

Dies geht auch aus der Fig. 5 hervor, wo ein solcher Halbzeugabschnitt 6 zu einem Schlitzrohr eingeformt wurde, um zu einem Rohr längsgeschweißt zu werden.

### Zahlenbeispiel:

Ein Band der Dicke D = 0,20 mm aus weichgeglühtem SE-Cu 58 wurde durch gegenseitig fluchtende und jeweils 0,080 mm in das Band eintauchende keilförmige Kreismesserspitzen in B = 6 mm breite Streifen (Abschnitte) 6 geteilt. Die Breite der auf einer oberen und auf einer unteren Arbeitswelle axial fest verspannten Kreismesserscheiben 5 war dabei gleich der Bandstreifenbreite B - mit der angeschliffenen Kreismesserspitze in der halben Scheibendicke B/2. Der Keilwinkel des Nutenprofils beträgt α = 20°. Nach dem Verspannen mehrerer Kreismesser 5 auf den (beiden) Arbeitswellen wurden diese im Gerüst auf Flucht und Rundlauf der Messerspitzen 2a und 3a abgerichtet. Durch diesen Abrichtvorgang erfolgte ein leichtes Verrunden der keilförmigen Spitzen 2a/3a auf einen Scheibenspitzenradius ≤ 5 µm.

Mit dem derart abgerichteten (Keil-)Kreismessersystem und mit Aufbringung eines auf den Bandstreifenquerschnitt ausgerichteten Bremszuges wurden symmetrisch längsgekerbte Bandstreifen 6 erzeugt. Die Stegdicke d betrug d = 30 bis 50 µm, im Mittel also 40 um entsprechend 20 % der Banddicke D.

Das so behandelte Coil wurde auf den Abhaspel einer Weiterverarbeitungsmaschine gebracht. Am Coil wurden dann nacheinander auf eine Länge von ca. 1 m von Hand die einzelnen Abschnitte 6 von 6 mm Breite vom Coil getrennt, indem jeweils der äußerste Abschnitt 6 durch Auslenken aus der Bandebene unter leichtem Zug abgerissen wurde. Später untersuchte Proben zeigten eine in etwa mittig verlaufende Bruchzone von im Querschnitt etwa 40 ± 10 µm Dicke. Gratbildung konnte weder im Schliff noch durch Befühlen der Bruchzone festgestellt werden. Die Querschnitte der getrennten Einzelabschnitte 6 zeigten im Rahmen der notwendigen Toleranz keine unzulässige, bleibende plastische Verformung des Bandquerschnittes durch die zum Trennen angewendete Kräfte. Die solchermaßen getrennten Einzelabschnitte 6 wurden in die Weiterverarbeitungsmaschine gefädelt und gemeinsam mit kleiner Spannung, gleichmäßig beschleunigend zur Weiterverarbeitung über Führungsrollen eingezogen, die die notwendige gegensinnige Auslenkung der Einzelabschnitte 6 gegeneinander zum fortlaufenden Abreißen bewirkten.

In Fig.7 wird schließlich - ausgehend von einem bandförmigen Halbzeug 1 mit keilförmigen Nuten 2, 3 und verbleibendem Steg 4 nach Fig.7a (vgl. Fig.3) - der Einfluß von beispielsweise drei Walzschritten auf die Ausbildung des Nutpaares 2, 3 gezeigt.

Bereits nach dem ersten Walzschritt (Fig.7b) wird am Ort der Nuten 2, 3 eine annähernd rechtwinklige Kantenführung erreicht.

Nach weiteren zwei Walzschritten sind die ursprünglichen Nuten 2, 3 zwar fast zugewalzt (Fig.7c / 7d), am Ort der Nuten 2, 3 verbleibt jedoch eine Sollbruchstelle 7.

## Patentansprüche

1. Bandförmiges Halbzeug (1) aus duktilem Material
**dadurch gekennzeichnet,**
- **dass** es sich bei dem duktilen Material um Kupferbasiswerkstoffe handelt,
- **dass** seine Dicke maximal 0,5 mm beträgt,
- **dass** es auf gegenüberliegenden Seiten mindestens ein Paar keilförmiger Nuten (2, 3) in gegenseitig fluchtender Ausrichtung aufweist und
- **dass** zwischen den Spitzen (2a, 3a) der keilförmigen Nuten (2, 3) ein Steg (4) vorliegt, dessen Dicke d im Vergleich zur Dicke D des Halbzeuges 5 bis 40% beträgt und so gering ist, dass er durch gegensinnige Auslenkung der durch das Nutenpaar (2, 3) abgegrenzten Halbzeugbereiche ohne spanende Verformung mit geringem Kraftaufwand abreißbar ist.

2. Halbzeug nach Anspruch 1, **dadurch gekennzeichnet, dass** die Nuten (2, 3) spanlos geformt sind.

3. Halbzeug nach Anspruch 1 oder 2, **dadurch gekennzeichnet, dass** das bandförmige Halbzeug beschichtet ist.

4. Halbzeug nach einem oder mehreren der Ansprüche 1 bis 3, **dadurch gekennzeichnet, dass** der Steg (4) mittig in der durch das Nutenpaar (2, 3) definierten Ausdehnung des Halbzeugs liegt.

5. Halbzeug nach einem oder mehreren der Ansprüche 1 bis 3, **dadurch gekennzeichnet, dass** der Steg (4) außermittig in der durch das Nutenpaar (2, 3) definierten Ausdehnung des Halbzeugs liegt.

6. Halbzeug nach einem oder mehreren der Ansprüche 1 bis 3, **dadurch gekennzeichnet, dass** der Steg (4) in der durch das Nutenpaar (2, 3) definierten Ausdehnung des Halbzeugs eine Randlage einnimmt.

7. Halbzeug nach einem oder mehreren der Ansprüche 1 bis 6, **dadurch gekennzeichnet, dass** die Stegdicke d = 0,01 bis 0,1mm beträgt.

8. Halbzeug nach einem oder mehreren der Ansprüche 1 bis 7, **dadurch gekennzeichnet, dass** nur ein geringer Versatz der Spitzen (2a, 3a) der Nuten (2, 3) besteht.

9. Halbzeug nach einem oder mehreren der Ansprüche 1 bis 8, **dadurch gekennzeichnet, dass** der Keilwinkel α = 0° bis 120° beträgt.

10. Halbzeug nach Anspruch 9, **dadurch gekennzeichnet, dass** der Keilwinkel α= 10° bis 80° beträgt.

11. Halbzeug nach einem oder mehreren der Ansprüche 1 bis 10, **dadurch gekennzeichnet, dass** die Flanken (2b, 3b) der Nuten (2, 3) keine ebenen Flächen sind.

12. Halbzeug nach Anspruch 11, **dadurch gekennzeichnet, dass** die Flanken (2b, 3b) bogenförmige, gewellte, gestufte oder daraus kombinierte Querschnitte aufweisen.

13. Halbzeug nach einem oder mehreren der Ansprüche 1 bis 12, **dadurch gekennzeichnet, dass** es sich bei dem duktilen Material µm Werkstoffverbunde mit Kupferbasiswerkstoffen handelt.

14. Halbzeug nach einem oder mehreren der Ansprüche 1 bis 13, **dadurch gekennzeichnet, dass** es nach mindestens einer Kaltumformung am Ort der Nuten (2, 3) jeweils eine nahezu rechtwinklige Kantenführung aufweist.

15. Verwendung des Halbzeuges nach einem oder mehreren der Ansprüche 1 bis 14 zur Herstellung getrennter Halbzeugabschnitte (6) mit definierten Bruchflächen (7), wobei die Ausdehnung der Bruchflächen (7) in etwa der Dicke d des Steges (4) entspricht.

16. Verwendung nach Anspruch 15 zur Herstellung bandförmiger Halbzeugabschnitte (6) mit den Abmessungen:
Dicke D = 10 bis 300 µm, Breite B = 0,5 bis 25 mm.

17. Verwendung nach Anspruch 15 oder 16 zur Herstellung flexibler Flachbandkabel zur Übertragung elektrischer Signale oder zur Übertragung elektrischer Energie.

18. Verwendung nach Anspruch 15 oder 16 zur Herstellung elektromechanischer Bauteile, wie Steckverbinder, Relais, Kontaktfedern oder dergleichen.

## Claims

1. Ribbon-form semi-finished product (1) composed of ductile material,
**characterised in that**
- the ductile material is a copper-based material,
- its thickness is a maximum of 0.5 mm,
- it has at least one pair of wedge-shaped grooves (2, 3) in mutually aligned orientation on opposite sides, and
- between the tips (2a, 3a) of the wedge-shaped grooves (2, 3) there is a web (4) whose thickness d is from 5 to 40% of the thickness D of the semi-finished product and is so small that the web (4) can be torn by displacement in opposite directions of the regions of the semi-finished product that are delimited by the pair of grooves (2, 3), without material-removing machining and with only slight expenditure of force.

2. Semi-finished product according to claim 1, **characterised in that** the grooves (2, 3) are shaped without the removal of material.

3. Semi-finished product according to claim 1 or 2, **characterised in that** the ribbon-form semi-finished product is coated.

4. Semi-finished product according to one or more of claims 1 to 3, **characterised in that** the web (4) lies in the middle of the extent of the semi-finished product defined by the pair of grooves (2, 3).

5. Semi-finished product according to one or more of claims 1 to 3, **characterised in that** the web (4) lies eccentrically in the extent of the semi-finished product defined by the pair of grooves (2, 3).

6. Semi-finished product according to one or more of claims 1 to 3, **characterised in that** the web (4) occupies an edge position in the extent of the semi-finished product defined by the pair of grooves (2, 3).

7. Semi-finished product according to one or more of claims 1 to 6, **characterised in that** the web thickness d is from 0.01 to 0.1 mm.

8. Semi-finished product according to one or more of claims 1 to 7, **characterised in that** the tips (2a, 3a) of the grooves (2, 3) are offset only slightly.

9. Semi-finished product according to one or more of claims 1 to 8, **characterised in that** the wedge angle α is from 0° to 120°.

10. Semi-finished product according to claim 9, **characterised in that** the wedge angle α is from 10° to 80°.

11. Semi-finished product according to one or more of claims 1 to 10, **characterised in that** the flanks (2b, 3b) of the grooves (2, 3) are not flat faces.

12. Semi-finished product according to claim 11, **characterised in that** the flanks (2b, 3b) have curved, corrugated or stepped cross-sections or a combination thereof.

13. Semi-finished product according to one or more of claims 1 to 12, **characterised in that** the ductile material is a composite material with a copper-based material.

14. Semi-finished product according to one or more of claims 1 to 13, **characterised in that**, after at least one cold-forming operation at the site of the grooves (2, 3), it has an almost right-angled edge guide in each case.

15. Use of the semi-finished product according to one or more of claims 1 to 14 for the manufacture of separate portions (6) of semi-finished product which have defined surfaces of fracture (7), the extent of the surfaces of fracture (7) corresponding approximately to the thickness d of the web (4).

16. Use according to claim 15 for the manufacture of ribbon-form portions (6) of semi-finished product having the dimensions:
thickness D = 10 to 300 µm, width B = 0.5 to 25 mm.

17. Use according to claim 15 or 16 for the manufacture of flexible flat ribbon cables for the transmission of electrical signals or for the transmission of electrical energy.

18. Use according to claim 15 or 16 for the manufacture of electromechanical components, such as plug-in connectors, relays, contact springs or the like.

## Revendications

1. Ebauche en forme de bande (1) composée d'un matériau ductile
**caractérisée en ce que**
- le matériau ductile est un matériau avec une base en cuivre,
- son épaisseur s'élève au maximum à 0,5 mm,
- elle comporte, sur des côtés opposés, au moins une paire de rainures cunéiformes (2, 3) orientées de manière à être mutuellement alignées et
- entre les pointes (2a, 3a) des rainures cunéiformes (2, 3), il y a une bride (4) dont l'épaisseur d s'élève entre 5 et 40 % de l'épaisseur D de l'ébauche et est si minime qu'elle peut être rompue par l'élongation en sens inverse des zones de l'ébauche délimitées par la paire de rainures (2, 3) sans déformation à enlèvement de copeaux, avec une force minime.

2. Ebauche selon la revendication 1, **caractérisée en ce que** les rainures (2, 3) sont réalisées sans enlèvement de copeaux.

3. Ebauche selon la revendication 1 ou 2, **caractérisée en ce que** l'ébauche en forme de bande est enduite.

4. Ebauche selon l'une quelconque ou plusieurs des revendications 1 à 3, **caractérisée en ce que** la bride (4) se trouve au milieu dans l'étendue de l'ébauche définie par la paire de rainures (2, 3).

5. Ebauche selon l'une quelconque ou plusieurs des revendications 1 à 3, **caractérisée en ce que** la bride (4) se trouve de manière excentrée dans l'étendue de l'ébauche définie par la paire de rainures (2, 3).

6. Ebauche selon l'une quelconque ou plusieurs des revendications 1 à 3, **caractérisée en ce que** la bride (4) adopte une position en bordure dans l'étendue de l'ébauche définie par la paire de rainures (2, 3).

7. Ebauche selon l'une quelconque ou plusieurs des revendications 1 à 6, **caractérisée en ce que** l'épaisseur de la bride est comprise entre d = 0,01 et 0,1 mm.

8. Ebauche selon l'une quelconque ou plusieurs des revendications 1 à 7, **caractérisée en ce qu'**il y a uniquement un décalage faible des pointes (2a, 3a) des rainures (2, 3).

9. Ebauche selon l'une quelconque ou plusieurs des revendications 1 à 8, **caractérisée en ce que** l'angle du taillant correspond à α = 0° à 120°.

10. Ebauche selon la revendication 9, **caractérisée en ce que** l'angle en coin correspond à α = 10° à 80°.

11. Ebauche selon l'une quelconque ou plusieurs des revendications 1 à 10, **caractérisée en ce que** les flancs (2b, 3b) des rainures (2, 3) ne sont pas des surfaces planes.

12. Ebauche selon la revendication 11, **caractérisée en ce que** les flancs (2b, 3b) comportent des sections transversales en arc, avec ondulations, en gradins ou une combinaison de ceux-ci.

13. Ebauche selon l'une quelconque ou plusieurs des revendications 1 à 12, **caractérisée en ce que** le matériau ductile est un composite comportant des matériaux avec une base de cuivre.

14. Ebauche selon l'une quelconque ou plusieurs des revendications 1 à 13, **caractérisée en ce qu'**elle comporte, après au moins un formage à froid au niveau des rainures (2, 3), une arête presque orthogonale.

15. Utilisation de l'ébauche selon l'une quelconque ou plusieurs des revendications 1 à 14 pour la fabrication de segments d'ébauche séparés (6) avec des surfaces de rupture définies (7), l'étendue des surfaces de rupture (7) correspondant à peu près à l'épaisseur d de la bride (4).

16. Utilisation selon la revendication 15 pour la fabrication de segments d'ébauche en forme de bande (6) avec les dimensions :
Epaisseur D = 10 à 300 µm, largeur B = 0,5 à 25 mm.

17. Utilisation selon la revendication 15 ou 16 pour la fabrication de câbles à bande plate souples pour la transmission de signaux électriques ou pour la transmission d'énergie électrique.

18. Utilisation selon la revendication 15 ou 16 pour la fabrication de composants électromécaniques, tels que des connecteurs, relais, ressorts de contact ou objets similaires.
